# EUROPEAN PATENT SPECIFICATION

(11) **EP 3 008 878 B1**
(45) Date of publication and mention of the grant of the patent: **27.04.2022**
(21) Application number: 14810880.6
(22) Date of filing: 13.06.2014
(51) Int. Cl.: H04L 29/08, H04L 29/06, H04N 21/2343

(54) **CONTROLLING DASH CLIENT RATE ADAPTATION**
STEUERUNG DER RATENANPASSUNG EINES DASH-CLIENTS
COMMANDE D'ADAPTATION DE DÉBIT DE CLIENT DASH

(30) Priority: 14.06.2013 US 201361835322 P; 19.02.2014 US 201414184280
(43) Date of publication of application: 20.04.2016
(73) Proprietor: Samsung Electronics Co., Ltd., Gyeonggi-do 16677 (KR)
(72) Inventor: BOUAZIZI, Imed, Richardson, Texas 75082 (US)
(74) Representative: Gulde & Partner
(86) International application number: PCT/KR2014/005221
(87) International publication number: WO 2014/200310

(56) References cited:
- EP-A1- 2 383 999
- WO-A1-2011/102791
- WO-A1-2011/102791
- WO-A1-2012/168356
- WO-A1-2013/004260
- WO-A2-2013/044025
- KR-A- 20120 083 744
- US-A1- 2012 117 261
- US-A1- 2012 259 946

## Description

### Technical Field

The present application relates generally to media streaming and, more specifically, to controlling rate adaptation behavior of a client in a media streaming network.

### Background Art

Recent developments in media streaming have favored Hypertext Transfer Protocol (HTTP) as the transport protocol for many reasons. HTTP protocol stacks are widely deployed on almost every existing platform. Launching a streaming service with HTTP does not require specialized hardware or software but may be done using existing off-the-shelf servers, such as the open source Apache web server. The usage of HTTP also has the benefit of reusing existing Content Distribution Network (CDN) infrastructures. Furthermore, due to the wide use of HTTP, network address translation (NAT) traversal and firewall issues that other protocols, such as Real-time Transport Protocol (RTP), may encounter are resolved inherently for HTTP.

Several adaptive HTTP streaming solutions have been developed over the past few years. A prominent solution is one standardized by the Moving Pictures Experts Group (MPEG) and 3rd Generation Partnership Project (3GPP) called Dynamic Adaptive Streaming over HTTP (DASH). DASH is a set of technology standards by which devices operate to enable high-quality streaming of media content over networks such as the Internet. DASH defines the formats for media data delivery, as well as the procedures starting from the syntax and semantics of a manifest file called the Media Presentation Description (MPD). Prior art EP 2383999 A1 presents an improved adaptive streaming solution wherein an optimal receiver strategy is dynamically created and stored in a client device for controlling the adaptive streaming of digital content. Prior art WO 2011/102791 A1 presents an optimal choice of representations for a client, wherein the streaming server makes groups of fragments and adds information (e.g., language type, tv format, bit rate, etc) to a group identifier to be sent to the client via the manifest file. The server can also order the groups in priorities to help client to make the best decision.

### Disclosure of Invention

### Technical Problem

The present invention is defined by a method for a network node, according to independent claim 1, for controlling DASH client rate adaptation, a corresponding network node apparatus, according to independent claim 6, and a DASH client device, according to independent claim 8. Further detailed embodiments are defined in the dependent claims.

### Solution to Problem

The method for causing changes to DASH client rate adaptation includes generating a signal comprising information on a segment availability according to the segment being cached to cause changes to rate adaptation behavior of one or more DASH client devices. The method also includes sending the signal to the one or more DASH client devices using a first communication channel that is separate from a second communication channel through which a DASH client device receives the segment.

An apparatus for causing changes to DASH client rate adaptation is provided. The apparatus includes a communication unit and a controller. The controller is configured to generate a signal comprising information on a segment availability according to the segment being cached to cause changes to rate adaptation behavior of one or more DASH client devices. The communication unit is configured to send the signal to the one or more DASH client devices using a first communication channel that is separate from a second communication channel through which a DASH client device receives the segment.

An apparatus for DASH client rate adaptation is provided. The apparatus includes a DASH client device having a communication unit and a controller. The communication unit is configured to receive the said message via a separate communication channel than the channel wherein the segments are received. The controller is configured to determine whether modify a rate adaptation behavior of the DASH client device based on the signal.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A; B; C; A and B; A and C; B and C; and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document.

### Brief Description of Drawings

For a more complete understanding of the present disclosure and its advantages, reference is now made to the following description taken in conjunction with the accompanying drawings, in which like reference numerals represent like parts:
FIGURE 1 illustrates an example wireless system that transmits messages in accordance with this disclosure;
FIGURE 2 illustrates an example transmit path in accordance with this disclosure;
FIGURE 3 illustrates an example receive path in accordance with this disclosure;
FIGURE 4 illustrates an example structure of a Media Presentation Description (MPD) file in accordance with this disclosure;
FIGURE 5 illustrates an example of a segmented ISOBMFF-based content in accordance with this disclosure;
FIGURE 6 illustrates an example process for controlling rate adaptation of a DASH client in accordance with this disclosure;
FIGURE 7 illustrates an example process for DASH client rate adaptation in accordance with this disclosure; and
FIGURE 8 illustrates an example node in which various embodiments of the present disclosure may be implemented.

### Mode for the Invention

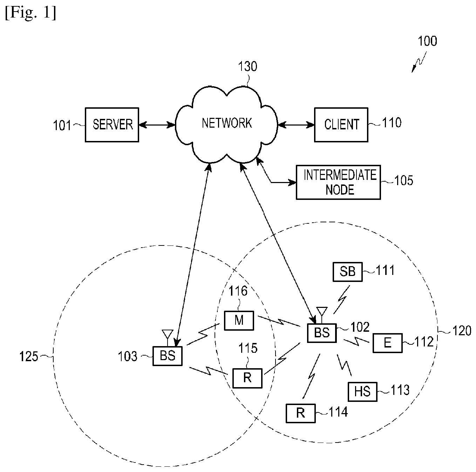

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably-arranged system or device.

Various figures described below may be implemented in wireless communications systems and with the use of OFDM or OFDMA communication techniques. However, the descriptions of these figures are not meant to imply physical or architectural limitations on the manner in which different embodiments may be implemented. Different embodiments of the present disclosure may be implemented in any suitably-arranged communications systems using any suitable communication techniques.

FIGURE 1 illustrates an example wireless system 100 that transmits messages in accordance with this disclosure. In the illustrated embodiment, the system 100 includes a server 101, clients 110-116, and a network 130 connecting the server 101 to the clients 110-116. The server 101 could represent a media server, such as an Apache server, an HTTP server, or other type of media content provider. The network 130 could represent the Internet, a media broadcast network, an IP-based communication system, or other suitable network and can include or be coupled to various intermediate nodes that connect the server 101 to the clients 110-116. The intermediate nodes may include wireless transmission points. Specific examples can include eNodeBs (eNBs) 102-103 or other base stations, network service provider nodes, gateways, intermediate servers (such as company or organization servers), relay stations, or access points. Clients 110-116 are in communication with the server 101 via the network 130 and the intermediate nodes. For example, the clients 110-116 may receive streamed media data from the server 101 using DASH standards and protocols in accordance with the teachings of the present disclosure. Although one server 101 is illustrated, multiple such servers may be present in the system 100. The intermediate nodes may also include a wired intermediate node 105.

In accordance with example wireless communication embodiments, the eNB 102 provides wireless broadband access to the network 130 to a first plurality of user equipments (UEs) within a coverage area 120 of the eNB 102. The first plurality of UEs includes UE 111, which may be located in a small business (SB); UE 112, which may be located in an enterprise (E); UE 113, which may be located in a WiFi hotspot (HS); UE 114, which may be located in a first residence (R); UE 115, which may be located in a second residence (R); and UE 116, which may be a mobile device (M), such as a cell phone, a wireless laptop, a wireless PDA, or the like. The eNB 103 provides wireless broadband access to the network 130 to a second plurality of UEs within a coverage area 125 of the eNB 103. The second plurality of UEs includes UE 115 and UE 116. In example embodiments, the eNBs 102-103 may communicate with each other and with UEs 111-116 using OFDM or OFDMA techniques.

While only six UEs are depicted in FIGURE 1, the system 100 may provide wireless broadband access to additional UEs. Also, the UEs 115-116 are located on the edges of both coverage areas 120-125. UE 115 and UE 116 can therefore each communicate with both eNBs 102-103 and be said to be operating in handoff mode as known to those of skill in the art.

Depending on the network type, other well-known terms may be used instead of "eNodeB" or "eNB," such as "base station" or "access point." For the sake of convenience, the terms "eNodeB" and "eNB" are used in this patent document to refer to network infrastructure components that provide wireless access to remote terminals. Also, depending on the network type, other well-known terms may be used instead of "user equipment" or "UE," such as "mobile station," "subscriber station," "remote terminal," "wireless terminal," or "user device." For the sake of convenience, the terms "user equipment" and "UE" are used in this patent document to refer to remote wireless equipment that wirelessly accesses an eNB, whether the UE is a mobile device (such as a mobile telephone or smartphone) or is normally considered a stationary device (such as a desktop computer or vending machine).

The clients 110-116 may access voice, data, video, video conferencing, and/or other broadband services via the network 130. In example embodiments, one or more of the clients 110-116 may be associated with an access point (AP) of a WiFi WLAN.

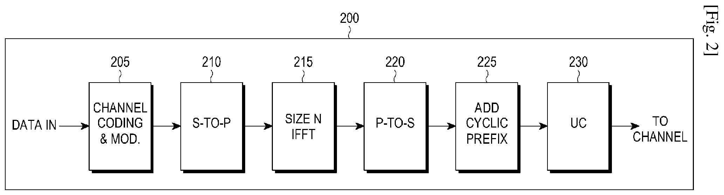

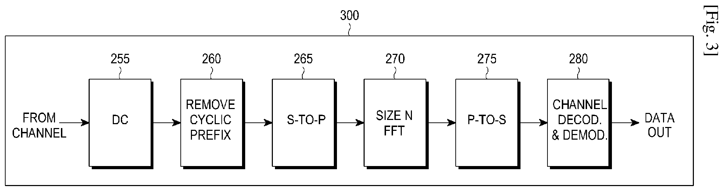

FIGURE 2 illustrates an example transmit path 200 in accordance with this disclosure. In some embodiments, the transmit path 200 may be used for OFDMA communications. FIGURE 3 illustrates an example receive path 300 in accordance with this disclosure. In some embodiments, the receive path 300 may also be used for OFDMA communications.

In FIGURES 2 and 3, for downlink communication, the transmit path 200 may be implemented in an eNB (such as eNB 102), and the receive path 300 may be implemented in a UE (such as UE 116). For uplink communication, the receive path 300 may be implemented in an eNB (such as eNB 102), and the transmit path 200 may be implemented in a UE (such as UE 116).

The transmit path 200 includes a channel coding and modulation block 205, a serial-to-parallel (S-to-P) block 210, a size N Inverse Fast Fourier Transform (IFFT) block 215, a parallel-to-serial (P-to-S) block 220, an add cyclic prefix block 225, and an up-converter (UC) 230. The receive path 250 includes a down-converter (DC) 255, a remove cyclic prefix block 260, a serial-to-parallel (S-to-P) block 265, a size N Fast Fourier Transform (FFT) block 270, a parallel-to-serial (P-to-S) block 275, and a channel decoding and demodulation block 280.

In the transmit path 200, the channel coding and modulation block 205 receives a set of information bits, applies coding (such as a low-density parity check (LDPC) coding), and modulates the input bits (such as with Quadrature Phase Shift Keying (QPSK) or Quadrature Amplitude Modulation (QAM)) to generate a sequence of frequency-domain modulation symbols. The serial-to-parallel block 210 converts (such as de-multiplexes) the serial modulated symbols to parallel data in order to generate N parallel symbol streams, where N is the IFFT/FFT size used in the eNB 102 and the UE 116. The size N IFFT block 215 performs an IFFT operation on the N parallel symbol streams to generate time-domain output signals. The parallel-to-serial block 220 converts (such as multiplexes) the parallel time-domain output symbols from the size N IFFT block 215 in order to generate a serial time-domain signal. The add cyclic prefix block 225 inserts a cyclic prefix to the time-domain signal. The up-converter 230 modulates (such as up-converts) the output of the add cyclic prefix block 225 to an RF frequency for transmission via a wireless channel. The signal may also be filtered at baseband before conversion to the RF frequency.

A transmitted RF signal from the eNB 102 arrives at the UE 116 after passing through the wireless channel, and reverse operations to those at the eNB 102 are performed at the UE 116. The down-converter 255 down-converts the received signal to a baseband frequency, and the remove cyclic prefix block 260 removes the cyclic prefix to generate a serial time-domain baseband signal. The serial-to-parallel block 265 converts the time-domain baseband signal to parallel time domain signals. The size N FFT block 270 performs an FFT algorithm to generate N parallel frequency-domain signals. The parallel-to-serial block 275 converts the parallel frequency-domain signals to a sequence of modulated data symbols. The channel decoding and demodulation block 280 demodulates and decodes the modulated symbols to recover the original input data stream.

Each of the components in FIGURES 2A and 2B can be implemented using only hardware or using a combination of hardware and software/firmware. As a particular example, at least some of the components in FIGURES 2A and 2B may be implemented in software, while other components may be implemented by configurable hardware or a mixture of software and configurable hardware. For instance, the FFT block 270 and the IFFT block 215 may be implemented as configurable software algorithms, where the value of size N may be modified according to the implementation.

Furthermore, although described as using FFT and IFFT, this is by way of illustration only and should not be construed to limit the scope of this disclosure. Other types of transforms, such as Discrete Fourier Transform (DFT) and Inverse Discrete Fourier Transform (IDFT) functions, could be used. It will be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

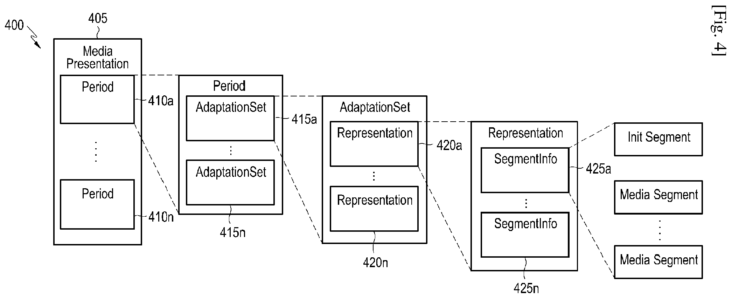

FIGURE 4 illustrates an example structure of a Media Presentation Description (MPD) file 400 in accordance with this disclosure. In DASH, the MPD file 400 is a manifest file that describes how to access media data of a presentation and how to provide annotations for the different content components to help a receiver or end user with content selection.

As shown in FIGURE 4, an MPD file 400 describes a media presentation 405, which is divided into a set of consecutive time periods 410a-410n. Each period 410a-410n includes a set of media components that are defined as adaptation sets 415a-415n. For a specific component, an adaptation set 415a-415n includes a set of representations 420a-420n, each of which is a different encoding of the same media component (such as with different bitrates, codecs, or formats). Each representation 420a-420n may be fetched and streamed separately. In order to simplify media streaming, each representation 420a-420n may be divided into one or more media segments 425a-425n. A representation 420a-420n in the MPD file 400 describes the characteristics for that specific encoding of the content component (such as the bitrate, codec, or format). Additionally, a representation 420a-420n provides access information for each segment 425a-425n of that content representation. The MPD file 400 assumes that the segments are accessible using HTTP uniform resource locators (URLs) and optionally byte ranges inside the referenced resources. A template construction is provided to avoid referencing each single segment with its own URL in the MPD file 400. Furthermore, the segments 425a-425n can be indexed starting from index 1 and incrementing by 1 for each subsequent segment.

DASH defines at least two different media data formats, one based on the International Organization for Standardization Base Media File Format (ISOBMFF) and one based on the MPEG-2 Transport System (M2TS).

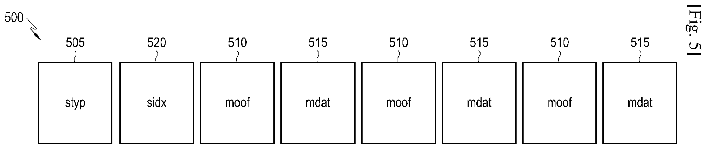

FIGURE 5 illustrates an example of a segmented ISOBMFF-based content in accordance with this disclosure. In the ISOBMFF-based format, a DASH representation is a compliant ISOBMFF file that has the characteristic of being fragmented, meaning the media data of the file is provided in fragments. Fragmentation has a benefit when it comes to low delay operation, which is important in streaming applications.

As shown in FIGURE 5, a media segment 500 in the ISOBMFF-based format is identified using a segment type (in a styp box 505) and includes one or more movie fragments and the associated media data (in respective moof 510 and mdat boxes 515). The moof box 510 contains the metadata and seeking information for a media fragment, while the mdat box 515 includes the media fragments (such as audio or video frames). To simplify access and navigation of media segments, a segment index is provided (via sidx box 520), which indexes Random Access Points (RAPs) and movie fragments of that particular segment 500. This indexing is particularly useful to enable clients to perform arbitrary representation switching within an adaptation set while maintaining a seamless user experience, accurate media synchronization, and continuous playback.

As noted above, another format defined in DASH is based on M2TS, where an MPEG-2 elementary stream corresponds to a representation. The available representations are multiplexed into the main M2TS. Segmentation may be performed to simplify delivery of the MPEG-2 TS.

Embodiments of the present disclosure recognize that the difference between adaptive HTTP streaming solutions and progressive download lies in the ability of adaptive HTTP streaming solutions to react to congestion situations and throughput variations and adapt their bitrates accordingly. In progressive download, a media file containing a single representation of content is downloaded by a client. Multiple encodings may exist, but no appropriate description and selection mechanisms are provided for progressive download, which limits selection of the appropriate representation of the content at the start of the session through an external mechanism (such as user selection).

Embodiments of the present disclosure recognize that, in DASH, each media component of the content is provided as part of an adaptation set. An adaptation set includes one or more representations of the same content, among which the DASH client may select one at any time of the streaming session. A DASH client adapts to network conditions by switching to a representation that fits within the overall throughput budget. Embodiments of the present disclosure recognize that DASH rate adaptation is client-driven; however, the accuracy of the rate adaptation is governed by the presentation author (such as a media server and/or a network), which controls the number of operation points from which the DASH client chooses.

A DASH client may monitor throughput and the level of one or more media buffers in the DASH client and decide whether to switch representations and, if so, which representation to select. For example, a DASH client may use the "segment download time to segment duration" ratio as an indication of whether the available throughput is lower, equal to, or higher than the bandwidth needed by the representation of which the media segment is being downloaded. A value higher than 1.0 indicates that the DASH client takes more time to download a media segment than the amount of media provided by that media segment. This is indicative of a possible forthcoming playback problem since the media reception rate is lower than the media consumption rate, which will drain the media buffer. A DASH client then may choose to switch to a representation with lower bandwidth requirements.

DASH relies on clients to perform rate adaptation by switching between the representations that are provided by a content provider. However, intermediate nodes, such as those run by mobile operators, often need to adjust the bitrates of existing connections to deal with short- or long-term overload of a particular cell or area in a core network to promote network use efficiencies. Two different approaches have been proposed to resolve this issue. In a first approach, an intermediate node may throttle the bandwidth of a connection by delaying or dropping packets of the flow that carries Transport Control Protocol/Internet Protocol (TCP/IP) packets of a DASH session. As a consequence, TCP adjusts the transmission rate to the available throughput, and the DASH client later adjusts by switching based on the reduced bandwidth. This approach may be less than optimal because it forces retransmissions to recover lost packets and increases management overhead associated with throttling connections.

In a second approach, intermediate nodes intercept requests for manifest files (MPD files 400) and re-author the MPD files by removing representations that require higher bandwidth. However, this approach may have several drawbacks. For example, re-authoring an MPD file mixes up MPD update timelines since two sources are involved in the authoring of the MPD file. For on-demand services, the original MPD file may not foresee any updates to the MPD file, and DASH clients will not be seeking updates to the MPD file. The complexity of the processing may also be significant as intermediate nodes will need to parse and re-author the MPD files.

Accordingly, embodiments of the present disclosure provide methods and apparatuses for controlling the rate adaptation procedures at a DASH client 110-116. Embodiments of the present disclosure use the DASH event framework and define a set of rate control events or signals to control or modify rate adaptation procedures at the DASH client.

After issuing an MPD file, the server 101, the network 130, or an intermediate node (such as node 105) may prefer certain representations. The network 130 has a cache with a copy of certain representation(s) of media content. The network 130 may prefer the client 110-116 use the cached representation(s) for network efficiency and congestion reduction, which may also be beneficial for the client (such as in latency reduction). In another example, an operator of the network 130 or server 101 may detect resource congestion and desire the DASH client 110-116 to use a lower bandwidth representation. In yet another example, a selected set of representations can be delivered over enhanced multimedia broadcast multicast service (eMBMS), and the operator of the network 130 or server 101 may prefer eMBMS delivery to the DASH client. Additional examples of factors influencing the server 101, the network 130, or the intermediate node 105 representation preferences include buffer sizes, server status, and preferred URLs.

The server 101 or the intermediate node 105 inserts events or sends signals to guide a DASH client 110-116 in rate adaptation. In example embodiments, the intermediate node 105 may intercept and include the control signal as part of one or more DASH segments and/or provide the signal as a DASH event. The intermediate node 105 sends a control signal over a communication channel that is separate from the communication channel that the DASH client receives an MPD file or media content. The control signal message comprises information on a segment availability according to the segment being cached, and may also indicate that specific representation(s) are unavailable temporarily, such as because of bandwidth availability, server status, or buffer constraints. In other examples, the control signal may indicate that specific representation(s) are preferred for consumption, such as because of cache copy availability or bandwidth utilization of these representation(s). In still other examples, the control signal may indicate that a particular representation is now available over a channel or network that is different from the channel or network presently used to deliver representations to the client.

In example embodiments, an event is defined to deliver a rate control signal. A scheme URI may be defined for this purpose, such as "urn:mpeg:dash:control:2013." Each rate control message may include a value and may include additional information. Table 1 below describes a set of possible control signals, semantics of the control signals, and the content indicated by the control signals.

Table 1

**[Table 1]**

| **Value** | **Description** | **Message Data** |
|---|---|---|
| 1 | Representation temporarily unavailable | A representation is temporarily not available for consumption. The message data contains the representation identifier "Representation@id" or it may refer to the current representation. |
| 2 | Representation permanently unavailable | A representation is permanently made unavailable and the -DASH client should avoid using this representation in the future. The message data may contain the representation identifier or it may refer to the current representation. |
| 3 | Representation available | A representation is available again after it has been made temporarily unavailable. The message data may contain the representation identifier. |
| 4 | Preferred Representation | A representation is recommended to the DASH client over other representations of the same AdaptationSet. The message data carries the representation identifier. |
| 5 | Available Throughput or Bandwidth | The network estimates or guarantees a certain bandwidth for the DASH client and expects the client to perform rate adaptation in accordance with this recommendation. The message data may contain the available bandwidth or throughput in bits per second or in some other unit. |

In example embodiments, an event message may be defined according to the DASH specification ISO/IEC 23009-1 Amendment 1 (which is hereby incorporated by reference in its entirety) using a message structure as follows:
aligned(8) class EventMessageBox extends FullBox('emsg', version = 0, flags = 0){
string scheme_id_uri;
string value;
unsigned int(32) timescale;
unsigned int(32) presentation_time_delta;
unsigned int(32) event_duration;
unsigned int(32) id;
unsigned int(8) message_data[];
}

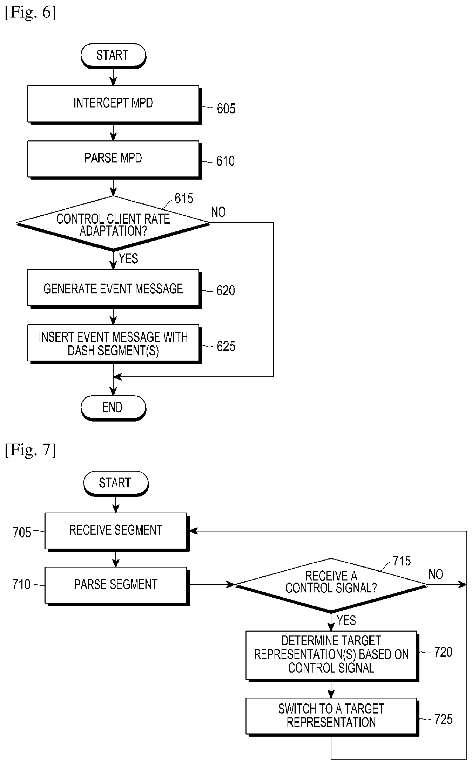

FIGURE 6 illustrates an example process for controlling rate adaptation of a DASH client in accordance with this disclosure. For ease of explanation, the process depicted in FIGURE 6 may be performed by the server 101 or any intermediate node (such as eNB 102, eNB 103, or node 105) in FIGURE 1.

The process begins with a node intercepting an MPD file (step 605) and parsing the MPD file (step 610). For example, as part of these steps, the intermediate node 105 may receive the MPD file and determine from the MPD file which representations are made available for a client 110-116 to stream. When the server 101 affects rate adaptation control, steps 605-610 may not be performed since the server 101 may know the available representations without needing to intercept and parse any MPD files.

The node determines whether to control client rate adaptation (step 615). For example, as part of this step, the server 101 and/or the intermediate node 105 may determine whether certain representations are unavailable, not preferred, or preferred. This could be based on bandwidth budget goals for a streaming session, where the bandwidth budget goals are based on network conditions, cache copy availability, server or buffer status, or other or additional factors.

If the node determines not to control client rate adaptation, the process may end. If, however, the node determines to control client rate adaptation, the node may generate an event message (step 620) and insert the event message with one or more DASH segment(s) (step 625). For example, as part of these steps, the node may generate an event message according to the format and content shown in Table 1. The event message may be a DASH event. When the control signal is transmitted separately, step 620 may not be performed, and the node may send the generated event message as a rate control signal to the client.

Upon sending the event message in step 625, the process may end. The node may continue to monitor for MPD transmissions, network conditions, and/or monitor representations streamed over the network to determine compliance with representation selections and/or to determine whether to send additional control signals (such as based on changed network conditions).

FIGURE 7 illustrates an example process for DASH client rate adaptation in accordance with this disclosure. For ease of explanation, the process depicted in FIGURE 7 may be performed by a DASH client 110 in FIGURE 1.

The process begins with the client 110 receiving a segment (step 705) and parsing the segment (step 710). For example, as part of these steps, the client 110 may receive a media segment. The client 110 determines whether a control signal is received (step 715). For example, as part of this step, the client 110 may determine whether the control signal is present as a DASH event control message in the received segment. The client 110 receives the control signal separately from the media segments and may determine whether a rate control message is received before or after receipt of any media segments. In other examples, the client 110 may receive the control signal as part of an MPD file, such as an MPD file generated by the server 101.

If the client 110 does not receive a rate control signal, the client continues to receive media segments while streaming media content. If, however, the client 110 receives the control signal, the client 110 determines the target representation(s) based on the control signal (step 720). For example, as part of this step, the control signal may specify the target representation(s). In other examples, the control signal may specify target representation(s) that are currently unavailable, and the client 110 may determine the target representation(s) from the remaining available representations. In yet other examples, the control signal may specify a bandwidth budget, and the client 110 may determine the target representation(s) based on which meet the specified bandwidth budget.

The client switches to a target representation if it is not already using the target representation (step 725). For example, as part of this step, if more than one target representation is available after application of the server/network constraints/preferences indicated by the control signal, the client 110 may select the target representation based on the information included in the control signal and possibly information about the client device. Information about the client device could include buffer/bandwidth capacity, preferred codecs, and media quality/network utilization preferences. If not already using the selected representation, the client 110 switches to the selected representation. In example embodiments, the event control message may include an event timestamp for using the indicated representation, and the client 110 may switch to the indicated representation on or before the time indicated in the timestamp, such as to avoid disruptions in streaming the media content. The client continues to monitor for control signals and network conditions in performing rate adaptation for smooth and efficient streaming of the media content.

Although FIGURES 6 and 7 illustrate examples of different processes, various changes could be made to FIGURES 6 and 7. For example, while shown as a series of steps, various steps in each figure could overlap, occur in parallel, occur in a different order, or occur multiple times.

Embodiments of the present disclosure enable efficient and clean communications between DASH clients and network nodes by allowing upstream (server and network) nodes to suggest a selection of representation(s). These suggestions may or may not be required to be followed by the clients. The network is enabled to indicate a preference for specific representation(s) to the DASH client without interfering with the MPD file. Embodiments of the present disclosure also enable efficient and streamlined cooperation between a network and a client to select mutually beneficial operations in media streaming.

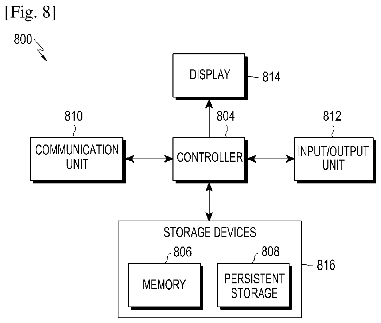

FIGURE 8 illustrates an example node 800 in which various embodiments of the present disclosure may be implemented. The node 800 shown here could represent one example implementation of the server 101, the eNBs 102-103, the intermediate node 105, and/or the clients 110-116 in FIGURE 1.

In this example, the node 800 includes a controller 804, a memory 806, a persistent storage 808, a communication unit 810, an input/output (I/O) unit 812, and a display 814. The controller 804 is any device, system, or part thereof that controls at least one operation, and such a device may be implemented in hardware or a combination of hardware and firmware and/or software. For example, the controller 804 may include a hardware processing unit, processing circuitry, media coding and/or decoding hardware and/or software, and/or a software program configured to control operations of the node 800. As a specific example, the controller 804 may process software instructions that are loaded into the memory 806. The controller 804 may include a number of processors, a multi-processor core, or some other type of processor(s) depending on the particular implementation. Further, the controller 804 may be implemented using a number of heterogeneous processor systems in which a main processor is present with secondary processors on a single chip. As another illustrative example, the controller 804 may include a symmetric multi-processor system containing multiple processors of the same type.

The memory 806 and the persistent storage 808 are examples of storage devices 816. A storage device is any piece of hardware that is capable of storing information, such as data, program code in functional form, and/or other suitable information either on a temporary basis and/or a permanent basis. The memory 806 may be, for example, a random access memory or any other suitable volatile or non-volatile storage device. The persistent storage 808 may contain one or more components or devices such as a hard drive, a flash memory, an optical disk, or some combination of the above. The media used by the persistent storage 808 also may be removable. For example, a removable hard drive may be used for the persistent storage 808.

The communication unit 810 provides for communications with other data processing systems or devices. For example, the communication unit 810 may include a wireless (cellular, WiFi, etc.) transmitter, receiver, and/or transceiver, a network interface card, and/or any other suitable hardware for sending and/or receiving communications over a physical or wireless communications medium. The communication unit 810 may provide communications through the use of physical and/or wireless communications links.

The input/output unit 812 allows for input and output of data with other devices that may be connected to or a part of the node 800. For example, the input/output unit 812 may include a touch panel to receive touch user inputs, a microphone to receive audio inputs, a speaker to provide audio outputs, and/or a motor to provide haptic outputs. The input/output unit 812 is one example of a user interface for providing and delivering media data to a user of the node 800. In other examples, the input/output unit 812 may provide a connection for user input through a keyboard, a mouse, an external speaker, an external microphone, and/or some other suitable input/output device. Further, the input/output unit 812 may send output to a printer. The display 814 provides a mechanism to display information to a user and is one example of a user interface for providing and delivering media data to a user of the node 800.

Program code for an operating system, applications, or other programs may be located in the storage devices 816, which are in communication with the controller 804. In some embodiments, the program code is in a functional form on the persistent storage 808. These instructions may be loaded into the memory 806 for processing by the controller 804. The processes of the different embodiments may be performed by the controller 804 using computer-implemented instructions, which may be located in the memory 806. For example, the controller 804 may perform processes for one or more of the modules and/or devices described above.

Although the present disclosure has been described with an example embodiment, various changes and modifications may be suggested to one skilled in the art. It is intended that the present disclosure encompass such changes and modifications as fall within the scope of the appended claims.

## Claims

1. A method for providing information to a Dynamic Adaptive Streaming HTTP, DASH, client device (110-116), by a network node (101, 102, 103, 105) of a network (130), the method comprising:
generating a message comprising information on a segment (425a-425n) availability according to the segment (425a-425n) being cached, for the DASH client device (110-116); and
sending the message to the DASH client device (110-116),
the method being **characterized in that** the message comprising the information on the segment availability indicating cache availability of the segment (425a-425n) is sent over a first communication channel that is separate from a second communication channel through which the DASH client device (110-116) receives the segment (425a-425n).

2. The method of claim 1, further comprising:
receiving a Media Presentation Description, MPD, file (400) for media to be streamed to the DASH client device (110-116); and
determining whether to change rate adaptation behavior based on at least the MPD file (400).

3. The method of claim 1, wherein the message is configured to cause a change to rate adaptation behavior in the DASH client device, and
the message further indicates that the segment is unavailable at least temporarily, to the DASH client device.

4. The method of claim 1, wherein the message further indicates one or more preferred representations for the one or more DASH client devices to stream.

5. The method of claim 1, wherein the message further includes information on an assigned bandwidth for the DASH client device.

6. An apparatus of a network node (101, 102, 103, 105) of a network (130), for providing information to a Dynamic Adaptive Streaming HTTP, DASH, client device (110-116), the apparatus comprising:
a controller (804) configured to generate a message comprising information on a segment (425a-425n) availability according to the segment being cached (425a-425n), for the DASH client device (110-116); and
a communication unit (810) configured to send the message to the DASH client device (110-116),
**characterized in that** the message comprising the information on the segment availability indicating cache availability of the segment (425a-425n) is sent over a first communication channel that is separate from a second communication channel through which the DASH client device (110-116) receives the segment (425a-425n).

7. The apparatus of claim 6 further adapted to operate according to one of claims 2 to 5.

8. An apparatus of a Dynamic Adaptive Streaming HTTP, DASH, client device (110-116) comprising:
a communication unit configured to receive a message comprising information on a segment (425a-425n) availability according to the segment (425a-425n) being cached, for the DASH client device (110-116) by an apparatus of a network node (101, 102, 103, 105) of a network (130), for providing information to the DASH client device (110-116); and
a controller configured to determine a segment (425a-425n) availability according to the segment (425a-425n) being cached based on the message,
**characterized in that** the message comprising the information on the segment availability indicating cache availability of the segment (425a-425n) is sent over a first communication channel that is separate from a second communication channel through which the DASH client device (110-116) receives the segment (425a-425n).

9. The apparatus of claim 8, wherein the controller is further configured to determine, if the message further indicates that the segment is unavailable at least temporarily, to switch from the segment to another segment.

10. The apparatus of claim 8, wherein the controller is further configured to determine, from the message, a preferred segment to stream.

11. The apparatus of claim 8, wherein the controller is further configured to determine, from the message, an assigned bandwidth for the apparatus.

## Patentansprüche

1. Verfahren zum Bereitstellen von Informationen für eine dynamische adaptive Streaming (Dynamic Adaptive Streaming) über Hypertextübertragungsprotokoll-, HTTP-, DASH-, -Client-Vorrichtung (110-116), durch einen Netzwerkknoten (101, 102, 103, 105) eines Netzwerks (130), das Verfahren umfassend:
Erzeugen einer Nachricht, umfassend Informationen über die Verfügbarkeit eines Segments (425a-425n) entsprechend dem zwischengespeicherten Segment (425a-425n) für die DASH-Client-Vorrichtung (110-116); und
Senden der Nachricht an die DASH-Client-Vorrichtung (110-116),
wobei das Verfahren **dadurch gekennzeichnet ist, dass** die Nachricht, die die Information über die Segmentverfügbarkeit umfasst, die die Cache-Verfügbarkeit des Segments (425a-425n) anzeigt, über einen ersten Kommunikationskanal gesendet wird, der von einem zweiten Kommunikationskanal getrennt ist, über den die DASH-Client-Vorrichtung (110-116) das Segment (425a-425n) empfängt.

2. Verfahren nach Anspruch 1, ferner umfassend:
Empfangen einer Medienpräsentationsbeschreibungs-, MPD-, - Datei (400) für Medien, die an die DASH-Client-Vorrichtung (110-116) gestreamt werden sollen; und
Bestimmen, ob das Ratenanpassungsverhalten anhand mindestens der MPD-Datei (400) geändert werden muss.

3. Verfahren nach Anspruch 1, wobei die Nachricht so konfiguriert ist, dass sie eine Änderung des Ratenanpassungsverhaltens in der DASH-Client-Vorrichtung bewirkt, und
die Nachricht ferner angibt, dass das Segment mindestens vorübergehend nicht für die DASH-Client-Vorrichtung verfügbar ist.

4. Verfahren nach Anspruch 1, wobei die Nachricht ferner eine oder mehrere bevorzugte Darstellungen für die eine oder die mehreren zu streamenden DASH-Client-Vorrichtunge angibt.

5. Verfahren nach Anspruch 1, wobei die Nachricht ferner Informationen über eine zugeteilte Bandbreite für das DASH-Client-Vorrichtung beinhaltet.

6. Vorrichtung eines Netzwerkknotens (101, 102, 103, 105) eines Netzwerks (130) zum Bereitstellen von Informationen für eine dynamische adaptive Streaming über Hypertextübertragungsprotokoll-, HTTP-, DASH-, -Client-Vorrichtung (110-116), die Vorrichtung umfassend:
eine Steuerung (804), die so konfiguriert ist, dass sie eine Nachricht mit Informationen über die Verfügbarkeit eines Segments (425a-425n) entsprechend dem zwischengespeicherten Segment (425a-425n) für die DASH-Client-Vorrichtung (110-116) erzeugt; und
eine Kommunikationseinheit (810), die so konfiguriert ist, dass sie die Nachricht an die DASH-Client-Vorrichtung (110-116) sendet,
**dadurch gekennzeichnet, dass** die Nachricht, die die Information über die Segmentverfügbarkeit umfasst, die die Cache-Verfügbarkeit des Segments (425a-425n) anzeigt, über einen ersten Kommunikationskanal gesendet wird, der von einem zweiten Kommunikationskanal getrennt ist, über den die DASH-Client-Vorrichtung (110-116) das Segment (425a-425n) empfängt.

7. Vorrichtung nach Anspruch 6, ferner angepasst zum Betreiben nach einem der Ansprüche 2 bis 5.

8. Vorrichtung einer dynamische adaptive Streaming über Hypertextübertragungsprotokoll-, HTTP-, DASH-, -Client-Vorrichtunges (110-116), umfassend:
eine Kommunikationseinheit, die so konfiguriert ist, dass sie eine Nachricht empfängt, die Informationen über die Verfügbarkeit eines Segments (425a-425n) für die DASH-Client-Vorrichtung (110-116) gemäß dem zwischengespeicherten Segment (425a-425n) durch eine Vorrichtung eines Netzwerkknotens (101, 102, 103, 105) eines Netzwerks (130) umfasst, um der DASH-Client-Vorrichtung (110-116) Informationen bereitzustellen; und
eine Steuerung, die so konfiguriert ist, dass sie eine Segmentverfügbarkeit (425a-425n) entsprechend dem Segment (425a-425n) bestimmt, das anhand der Nachricht zwischengespeichert wird,
**dadurch gekennzeichnet, dass** die Nachricht, die die Information über die Segmentverfügbarkeit umfasst, die die Cache-Verfügbarkeit des Segments (425a-425n) anzeigt, über einen ersten Kommunikationskanal gesendet wird, der von einem zweiten Kommunikationskanal getrennt ist, über den die DASH-Client-Vorrichtung (110-116) das Segment (425a-425n) empfängt.

9. Vorrichtung nach Anspruch 8, wobei die Steuerung ferner so konfiguriert ist, dass sie, wenn die Nachricht ferner anzeigt, dass das Segment mindestens vorübergehend nicht verfügbar ist, bestimmt, von dem Segment zu einem anderen Segment zu wechseln.

10. Vorrichtung nach Anspruch 8, wobei die Steuerung ferner so konfiguriert ist, dass sie aus der Nachricht ein bevorzugtes Segment für das Streaming bestimmt.

11. Vorrichtung nach Anspruch 8, wobei die Steuerung ferner so konfiguriert ist, dass sie aus der Nachricht eine zugeteilte Bandbreite für die Vorrichtung bestimmt.

## Revendications

1. Procédé pour fournir des informations à un dispositif client HTTP à streaming adaptatif dynamique, DASH, (110-116), par un nœud de réseau (101, 102, 103, 105) d'un réseau (130), le procédé comprenant :
la génération d'un message comprenant des informations sur une disponibilité de segment (425a-425n) en fonction du segment (425a-425n) qui est mis en mémoire cache, pour le dispositif client DASH (110-116) ; et
l'envoi du message au dispositif client DASH (110-116),
le procédé étant **caractérisé en ce que** le message comprenant les informations sur la disponibilité de segment indiquant une disponibilité en mémoire cache du segment (425a-425n) est envoyé sur un premier canal de communication qui est distinct d'un deuxième canal de communication à travers lequel le dispositif client DASH (110-116) reçoit le segment (425a-425n).

2. Procédé selon la revendication 1, comprenant en outre :
la réception d'un fichier de description de présentation de contenu multimédia, MPD, (400) pour un contenu multimédia à streamer au dispositif client DASH (110-116) ; et
la détermination s'il faut ou non changer un comportement d'adaptation de débit sur la base au moins du fichier MPD (400).

3. Procédé selon la revendication 1, dans lequel le message est configuré pour provoquer un changement de comportement d'adaptation de débit dans le dispositif client DASH, et
le message indique en outre que le segment est indisponible au moins provisoirement au dispositif client DASH.

4. Procédé selon la revendication 1, dans lequel le message indique en outre une ou plusieurs représentations préférées pour les un ou plusieurs dispositifs client DASH pour streamer.

5. Procédé selon la revendication 1, dans lequel le message inclut en outre des informations sur une largeur de bande assignée pour le dispositif client DASH.

6. Appareil d'un nœud de réseau (101, 102, 103, 105) d'un réseau (130), pour fournir des informations à un dispositif client HTTP à streaming adaptatif dynamique, DASH, (110-116), l'appareil comprenant :
un dispositif de commande (804) configuré pour générer un message comprenant des informations sur une disponibilité de segment (425a-425n) en fonction du segment (425a-425n) qui est mis en mémoire cache, pour le dispositif client DASH (110-116) ; et
une unité de communication (810) configurée pour envoyer le message au dispositif client DASH (110-116),
**caractérisé en ce que** le message comprenant les informations sur la disponibilité de segment indiquant une disponibilité en mémoire cache du segment (425a-425n) est envoyé sur un premier canal de communication qui est distinct d'un deuxième canal de communication à travers lequel le dispositif client DASH (110-116) reçoit le segment (425a-425n).

7. Appareil selon la revendication 6, en outre apte à fonctionner selon l'une des revendications 2 à 5.

8. Appareil d'un dispositif client HTTP à streaming adaptatif dynamique, DASH, (110-116), comprenant :
une unité de communication configurée pour recevoir un message comprenant des informations sur une disponibilité de segment (425a-425n) en fonction du segment (425a-425n) qui est mis en mémoire cache, pour le dispositif client DASH (110-116) par un appareil d'un nœud de réseau (101, 102, 103, 105) d'un réseau (130), pour fournir des informations au dispositif client DASH (110-116) ; et
un dispositif de commande configuré pour déterminer une disponibilité de segment (425a-425n) en fonction du segment (425a-425n) qui est mis en mémoire cache sur la base du message,
**caractérisé en ce que** le message comprenant les informations sur la disponibilité de segment indiquant une disponibilité en mémoire cache du segment (425a-425n) est envoyé sur un premier canal de communication qui est distinct d'un deuxième canal de communication à travers lequel le dispositif client DASH (110-116) reçoit le segment (425a-425n).

9. Appareil selon la revendication 8, dans lequel le dispositif de commande est en outre configuré pour déterminer, si le message indique en outre que le segment est indisponible au moins provisoirement, de commuter du segment à un autre segment.

10. Appareil selon la revendication 8, dans lequel le dispositif de commande est en outre configuré pour déterminer, à partir du message, un segment préféré pour streamer.

11. Appareil selon la revendication 8, dans lequel le dispositif de commande est en outre configuré pour déterminer, à partir du message, une largeur de bande assignée pour l'appareil.
